# EUROPEAN PATENT APPLICATION

(11) **EP 4 545 491 A1**
(43) Date of publication of application: **30.04.2025**
(21) Application number: 24208319.4
(22) Date of filing: 23.10.2024
(51) Int. Cl.: C02F 1/32, B08B 9/023

(54) **FLUID TREATMENT UNIT**

(30) Priority: 24.10.2023 DK PA202370549
(71) Applicant: ULTRAAQUA A/S, 9220 Aalborg Ø (DK)
(72) Inventor: Grønborg, Ole, 9220 Aalborg Øst (DK); Schjoldager, Mads Mørup, 9220 Aalborg Øst (DK)
(74) Representative: Münzer, Marc Eric

(57) **Abstract**

Fluid treatment unit (1), said unit comprising an inlet (2), an outlet (4), a conduit (7) between the inlet and the outlet, a transparent tube (18) arranged at least partly in the conduit, a UV light source arranged in the transparent tube, a wiper (46) arranged on said transparent tube and arranged to be displaceable along a longitudinal axis of the transparent tube to clean the transparent tube. The unit further comprises a displacement mechanism (48) for displacing the wiper along the transparent tube, said displacement mechanism comprising a spindle (50) with an external thread, said spindle being arranged such that a longitudinal axis of the spindle is parallel to the longitudinal axis of the transparent tube and such that the spindle is rotatable around the longitudinal axis of the spindle, and a connection element (56) connecting the spindle and the wiper, such that rotation of the spindle drives the displacement of the wiper. The fluid treatment unit further comprises a driving element (58) arranged at one end of the spindle, and a rotatable ring (60) having an axis of rotation, an outside surface (63) and an inside surface (62), said rotatable ring comprising driving means (62) arranged on the inside surface of the rotatable ring, said driving means cooperating with said driving element, such that rotation of the rotatable ring causes rotation of the driving element which causes rotation of the spindle. In this way, a simple, robust and easy to operate displacement mechanism is provided for a wiper.

## Description

The current invention relates to a fluid treatment unit comprising an inlet, an outlet, a conduit between the inlet and the outlet suitable for transporting fluid from the inlet to the outlet, a transparent tube arranged at least partly in the conduit, said transparent tube being suitable for arranging a UV light source in the transparent tube, a wiper arranged on said transparent tube and arranged to be displaceable along a longitudinal axis of the transparent tube to clean the transparent tube, a displacement mechanism for displacing the wiper along the transparent tube, said displacement mechanism comprising a spindle with an external thread, said spindle being arranged such that a longitudinal axis of the spindle is parallel to the longitudinal axis of the transparent tube and such that the spindle is rotatable around the longitudinal axis of the spindle, and a connection element connecting the spindle and the wiper, such that rotation of the spindle drives the displacement of the wiper,

### Description of related art

Fluid treatment units using Ultra Violet (UV) light for treating fluid passing through the unit are well known in the art. Fluid treatment units of this type are typically arranged with an inlet and an outlet and a conduit connecting the inlet and the outlet such that fluid, for example water, can flow into the unit via the inlet and out of the outlet after passing through the conduit. It is typical, that one or more glass tubes (or tubes made of some other transparent material) are arranged inside the conduit. Typically, the tubes are arranged perpendicular to the longitudinal axis of the chamber. However other angles and arrangements are also possible. UV light sources are arranged in the tubes. The glass tubes protect the UV light sources.

Over time, the tubes will get covered in solid particles from the fluid passing through the unit. At some point, the tubes will be so covered in particles that the effectivity of the UV light treatment will be reduced. It is therefore necessary to clean the tubes at regular intervals. In order to avoid the need for opening the unit which would require shutting down the fluid flow through the unit, it is well-known in the art to place a wiper on the tube. In the case of a tube with a circular cross section, an annular wiper with a corresponding circular inner cross section could be provided. A displacement mechanism is provided to displace the wiper back and forth along the tube. In this way, when it is desired to clean the tube, the displacement mechanism is activated to displace the wiper from one side of the tube to the other and then back again. The wiper scrapes, or in other ways cleans, the outer surface of the tube, thereby removing the layer of sediments on the tube.

An example of such a prior art type system is disclosed in US5528044. Here a single UV lamp is arranged inside a tube. A wiper is arranged on the tube and is driven by a spindle arranged parallel to and offset from the central axis of the tube. The spindle is driven by a motor.

Many other examples of cleaning mechanism are disclosed in the prior art. In the prior art solutions, it is typical that the displacement mechanism is driven by an electric motor. However, in certain cases, a removable handle is attached directly to the spindle and the spindle is turned manually by the user.

### Summary of the invention

A first aspect of the current invention is to provide a fluid treatment unit with a wiper displacement mechanism which is simpler than the prior art.

A second aspect of the current invention is to provide a fluid treatment unit with a wiper displacement mechanism which is easier to operate.

A third aspect of the current invention is to provide a fluid treatment unit with a wiper displacement mechanism which is more compact.

A fourth aspect of the current invention is to provide a fluid treatment unit with a wiper displacement mechanism which is more robust and is not dependent on a power supply or a handle which needs to be detached when not in use.

These aspects are solved via a fluid treatment unit as mentioned in the opening paragraph, further characterized by the features of the characterized portion of claim 1. In this way, a simple, robust and easy to use mechanism is provided for displacing a wiper of a fluid treatment unit.

In some embodiments, the fluid treatment unit comprises a UV light source arranged in the transparent tube.

In some embodiments, the axis of rotation of the rotatable ring is offset from an axis of rotation of the driving element. In some embodiment, the driving element is fixed to the end of the spindle, such that rotation of the driving element is equal to rotation of the spindle. In some embodiments, the longitudinal axis of the transparent tube is arranged perpendicular to a direction of the flow of fluid flowing through the unit when fluid is flowing through the unit. In some embodiments, the longitudinal axis of the transparent tube is parallel to or placed at an angle which is less than 90 degrees, less than 70 degrees or less than 50 degrees to the direction of the flow of fluid flowing through the unit when fluid is flowing through the unit. In some embodiments the driving means on the inside surface of the rotatable ring comprises toothed gears which cooperate with cooperating toothed gears on an outside surface of the driving element.

In some embodiments, the rotatable ring comprises an outer surface which is arranged to be turned by a hand of a user. In some embodiments, the outer surface of the rotatable ring is knurled.

In some embodiments, the displacement mechanism further comprises a handle which is arranged to turn the rotatable ring. In some embodiments, the handle comprises a plate like element comprising a hole suitable for a user to place a finger inside, a centre of said hole being arranged offset from an outer surface of the rotatable ring. In some embodiments, the plane of the plate like element is arranged perpendicular to the axis of rotation of the rotatable ring. In some embodiments, the plate like element is connected to the rotatable ring via a groove in an outer surface of the rotatable ring. In some embodiments, the groove has a path which extends at least partly along a circular path with a center which is aligned with the axis of rotation of the rotatable ring. In some embodiments, the plate like element is connected to the rotatable ring via at least one snap mechanism. In some embodiments, the handle comprises a gripping unit which is attached to the rotatable ring. In some embodiments, the gripping unit could be an elongated element suitable for being held by a user. In some embodiments, the elongated element is arranged rotatably around an axis which is parallel to an axis of rotation of the rotatable ring. In some embodiments, the gripping unit is arranged offset from the axis of rotation of the rotatable ring.

In some embodiments, when looking at the displacement mechanism along an axis which parallel to the axis of rotation of the rotatable ring, a cross section of the transparent tube is arranged inside an area defined by the outer surface of said rotatable ring. In some embodiments, the area is defined by the inner surface of the rotatable ring. In some embodiments, the longitudinal axis of the transparent tube is arranged offset from the rotational axis of the rotatable ring.

In some embodiments, the fluid treatment unit further comprises a first fixed portion and a central portion, said first fixed portion being arranged between the rotatable ring and the wiper, said first fixed portion being fixed in position with respect to the conduit along a dimension which is parallel to the axis of rotation of the rotatable ring and having a dimension perpendicular to the axis of rotation of the rotatable ring from the axis of rotation of the rotatable ring to an outer portion of the first fixed portion which is greater than the radius of the inner surface of the rotatable ring and said central portion comprising a support surface for rotationally supporting the inside surface of the rotatable ring. In some embodiments, the support surface is a surface of a cylindrical portion with a diameter which is equal to the inner surface of the rotatable ring. In some embodiments, one end of the transparent tube is supported by the first fixed element, the central element and/or the second fixed element. In some embodiments, the support surface comprises multiple individual points of support. In one such embodiment, the support surface comprises at least three rotating support wheels in contact with the inner surface of the rotatable ring.

In some embodiments, the fluid treatment unit further comprises a second fixed portion, said second fixed portion being arranged further from the conduit than the first fixed portion and having a dimension from the axis of rotation of the rotatable ring to an outer portion of the second fixed portion which is greater than the radius of the inner surface of the rotatable ring. In some embodiments, the rotatable ring is arranged on the central portion and between the first and second fixed portions.

In some embodiments, the second fixed portion is connected to the first fixed portion via one or more screws/bolts. In some embodiments, the central portion is integrally formed together with the second fixed portion.

In some embodiments, an outer diameter of at least a portion of the first fixed portion and an outer diameter of at least a portion of the rotatable ring are the same. In some embodiments, an outer diameter of at least a portion the rotatable ring and an outer diameter of at least a portion of the second fixed portion are the same. In some embodiments, the outer surface of the rotatable ring is parallel with an outer surface of the first and/or the second fixed portion.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Figure 1 shows a perspective view of a first embodiment of a fluid treatment unit according to the invention.
Figure 2 shows an exploded perspective view of the fluid treatment unit of figure 1.
Figure 3 shows a perspective detail view of a portion of the displacement mechanism of the fluid treatment unit of figure 1.
Figure 4 shows a perspective view of some of the main components of the displacement mechanism of the fluid treatment unit of figure 1 with the pipe element hidden.
Figure 5 shows an exploded perspective view of the main components of the displacement mechanism of figure 4.
Figure 6 shows an exploded perspective view of the fluid treatment unit of figure 1 from the bottom.
Figure 7 shows a cross section view of the fluid treatment unit of figure 1, as defined by the line VII-VII shown in figure 1.
Figure 8 shows a perspective view of a second embodiment of a fluid treatment unit according to the current invention.
Figure 9 shows an exploded perspective view of the fluid treatment unit shown in figure 8.

### Detailed description of the embodiments

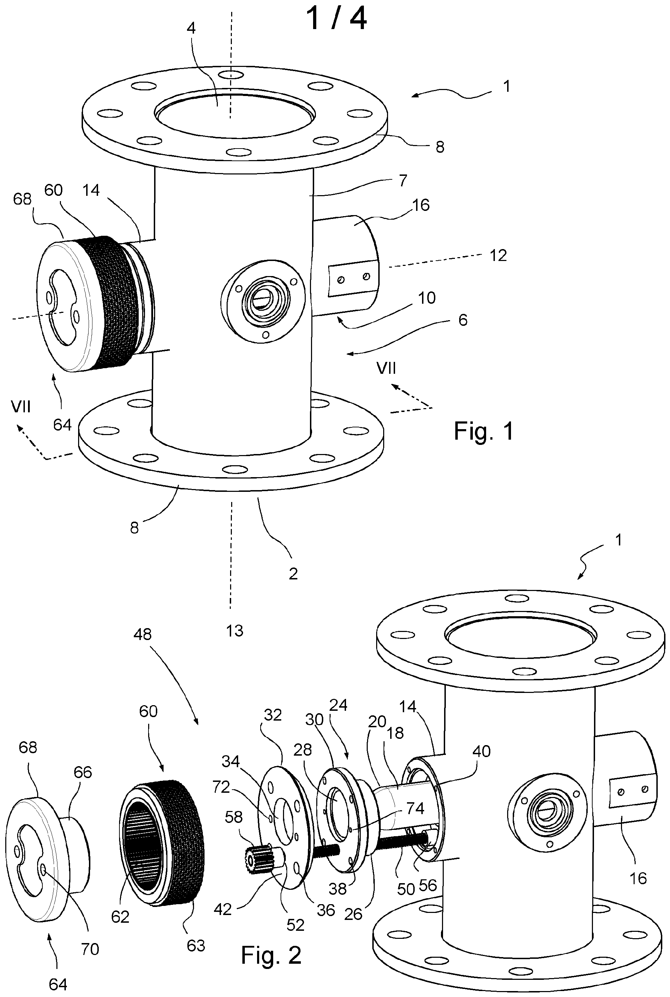

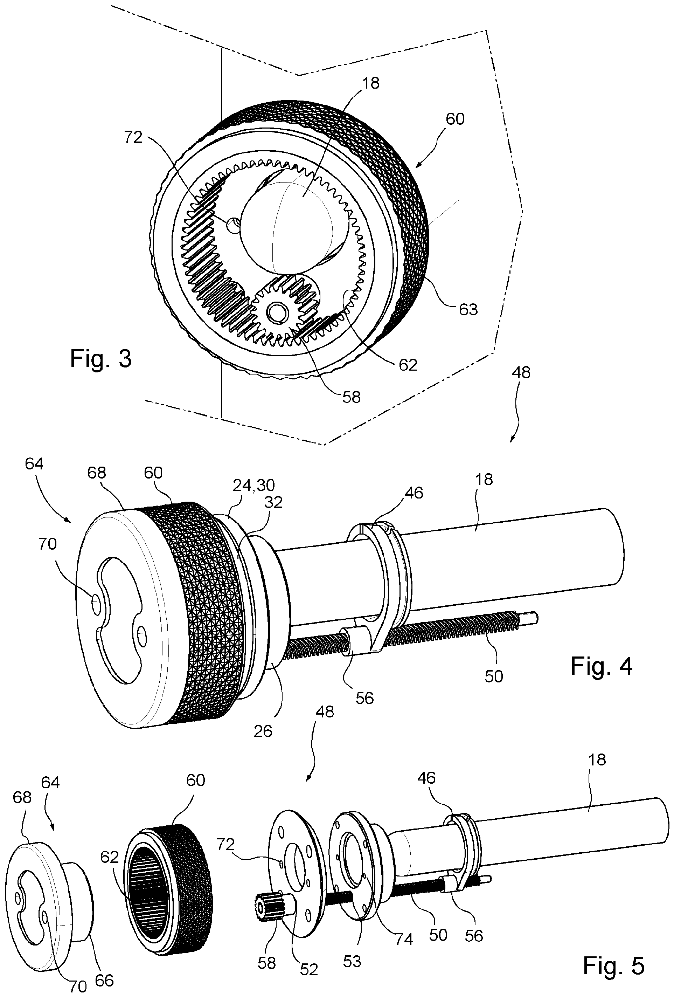

Figures 1 to 7 show different views of a first embodiment 1 of a fluid treatment unit according to the current invention. In this embodiment, the fluid treatment unit is a unit suitable for treating water, however, the unit according to the current invention could be suitable for treating other liquids and/or gases. The unit comprises an inlet 2, an outlet 4 and a conduit 6 connecting the inlet and the outlet. Water enters the unit via the inlet, flows through the conduit and exits via the outlet. The conduit in this embodiment is in the form of a cylindrical pipe 7. Connection flanges 8 are provided at each end of the pipe for connecting the unit to other pipes/units in the circuit.

The unit shown in the figures also comprises a cross pipe 10 passing through the conduit. In the current embodiment, a longitudinal axis 12 of the cross pipe is arranged perpendicular to a longitudinal axis 13 of the conduit. However, in other embodiments, the cross pipe could be arranged at other angles. The cross pipe has a first end 14 extending out from one side of the conduit and a second end 16 extending out from an opposing side of the conduit.

A transparent pipe 18 is arranged inside the cross pipe 10. The transparent pipe in the current embodiment is formed as a glass tube. The glass tube is closed at a first end 20 and open at the other (second) end 22. A UV lamp (not shown) is arranged inside the glass tube 18 during normal use. For the sake of simplicity in the drawings, the UV lamp is not shown. UV lamps of the kind used in treating water are well known in the art and the person skilled in the art will be able to supply a suitable UV lamp. Likewise the electrical circuits and connections are not shown in the figures as they would unnecessarily complicate the description and figures.

The glass tube is supported in the cross pipe at a first end via a first cylindrical element 24 arranged in the cross pipe. The first cylindrical element 24 is formed with a cylindrical portion 26 having an outer surface which matches an inner surface of the cross pipe. The cylindrical portion is inserted into the first end 14 of the cross tube. A hole 28 in the first cylindrical element is provided which matches an outer diameter of the glass tube. The glass tube is inserted into the hole in the first cylindrical element 24. In the current embodiment, the first cylindrical element also comprises a circular flange 30 which has an outer diameter which is equal to the outer diameter of the cross pipe. The circular flange 30 prevents the cylindrical element from displacing into the cross tube.

A tapered cylindrical element 32 is then provided in this embodiment. The tapered cylindrical element is not required for the invention, but provides an extra function as described herein. The smaller diameter of the tapered element is equal to the outer diameter of the first cylindrical portion. The tapered element 32 is also provided with a hole 34 which engages with the glass tube. The tapered element is in the current embodiment furthermore made from a plastic material which lights up when exposed to UV light. When the UV light lights up, the UV light will cause the tapered circular element to also light up. In this way, the user can easily see when the UV lamp is active.

The tapered circular element is fastened to the first circular element and to the first end of the cross pipe via four bolts (not shown) engaged in four holes 36 in the tapered element, passing through holes 38 in the first circular element and engaging with threaded holes 40 in the first end of the cross pipe. The four holes 36 in the tapered element are counter sunk such that the head of the bolts is arranged inside the tapered element without protruding from the surface 42 of the tapered element. The tapered cylindrical element and the first cylindrical element of this embodiment, could be interpreted as the first fixed element according to the claims.

The second end of the cross pipe comprises a through-going hole 44 which supports the glass tube at its second end. In this way, the glass tube is supported by the hole in the first cylindrical element at the first end of the cross pipe and the hole in the second end of the cross pipe.

The unit is further provided with an annular wiper 46 arranged displaceably on the glass tube between the first end and the second end of the cross tube. This type of wiper is well known in the art and will therefore not be described in more detail here. The actual wiper used is furthermore not critical for this current invention.

The unit also comprises a displacement mechanism 48 for displacing the wiper along the glass tube. The displacement mechanism in this embodiment comprises a spindle 50 with an external thread supported in a hole 52 in the tapered element, a hole 53 in the first cylindrical element and a hole 54 in the second end 16 of the cross tube. The holes are not threaded and the spindle can rotate in the holes without displacing. The spindle is engaged with a connection element 56 with an internal thread. The connection element is fastened to the annular wiper. As the spindle rotates, the connection element and hence also the wiper is caused to move back and forth in a direction parallel to a longitudinal axis of the spindle and the glass tube depending on the direction of rotation of the spindle.

The end of the spindle which is closest to the first end of the cross pipe, extends through the tapered element. A toothed gear wheel 58 is arranged on the free end of the spindle. The toothed gear wheel could be considered a form of driving element. The displacement mechanism further comprises a rotatable ring 60 with an inside surface 62 and an outside surface 63. The inside surface is provided with an internal toothed gear portion 62. The thread could be considered driving means. The outside surface is provided with a knurled surface finish to provide a good grip for a user. The internal toothed gear portion 62 engages with the external toothed gear wheel 58. As the rotatable ring 60 is rotated, the toothed gear wheel 58 will rotate, thereby also causing the spindle to rotate. The wiper will therefore also move back and forth, depending on the direction of rotation of the rotatable ring. Other forms for driving mechanism could also be imagined. For example a friction fit between a steel outer rotatable ring and a rubber wheel rolling on the surface.

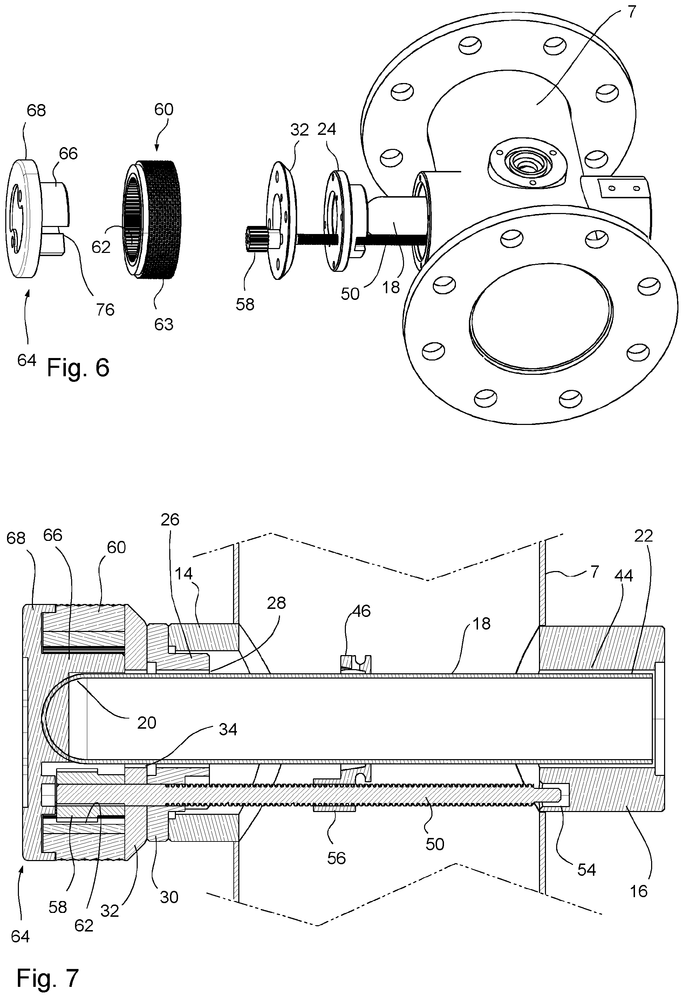

The rotatable ring 60 is supported by an end cap element 64. The end cap element comprises a cylindrical portion 66 and a flange portion 68. The flange portion is arranged as a circular flange having an outer diameter which is essentially equal to the outer diameter of the rotatable ring element and the maximum diameter of the tapered element. The cylindrical portion 66 is arranged to support the internal toothed portion of the rotatable ring. The diameter of the inside surface of the rotatable ring is essentially equal to the outer diameter of the cylindrical portion. As such, the rotatable ring is rotatably supported by the cylindrical portion. The end cap element is attached to the tapered element and the first circular element via two bolts (not shown) which pass through two countersunk holes 70 in the end cap element, two holes 72 in the tapered element and engage with two threaded holes 74 in the first circular element. It should be noted that a recess 76 is provided in the bottom of the cylindrical element to make room for the external toothed gear wheel (see figure 6).

The displacement mechanism of this embodiment therefore provides a very simple and easy to use mechanism for displacing a wiper back and forth along the glass tube.

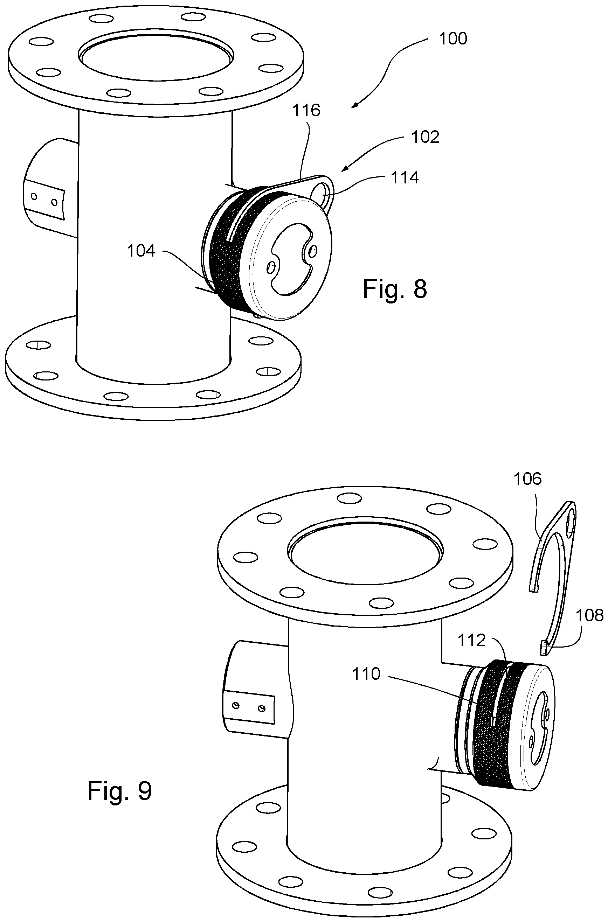

Figures 8 and 9 shows two different views of a second embodiment 100 of a water treatment unit according to the current invention. The details of the unit are essentially the same, however, in this case, a handle 102 is attached to the rotatable ring 104. The handle is formed from a plate shaped element cut out of a metal plate. The handle comprises an engagement portion in the form of a C shaped portion 106 with two hooks 108 arranged at two ends of the C shaped portion. The two hooks engage with holes 110 in the rotatable ring. The holes are provided at the end of a circular groove 112 in the outer surface of the rotatable ring. In this way, the handle can be snapped into position, by sliding the ends of the C shaped portion along the groove, thereby causing the ends to displace outwardly in a spring like manner, after which the ends will snap into the holes and hold the handle in place. In this case, the plane of the handle is arranged perpendicular to the longitudinal axis of the spindle. A hole 114 is provided in the portion 116 of the handle which extends away from the rotatable ring. The hole 114 is formed as a finger hole, and is suitable for a user to place his or her finger in the hole. The user can then easily turn the mechanism, but rotating his or her finger around the rotatable ring. In another embodiment, not shown, a gripping portion in the form of an elongated element, for example shaft, could be arranged in the hole and extending perpendicular to the plane of the plate like element. Other embodiments of handles could also be provided.

It should be noted that the current specification has shown two concrete embodiments, however, other embodiments which fall with the scope of the claims will be able to be provided by the person skilled in the art, based on the teachings in this specification.

It is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific manufacturing procedures have not been described in detail since it is maintained that the person skilled in the art would be able to find suitable materials and suitable processes to manufacture the fluid treatment unit according to the current invention.

## Claims

1. Fluid treatment unit (1), said unit comprising:
a. an inlet (2),
b. an outlet (4),
c. a conduit (7) between the inlet and the outlet suitable for transporting fluid from the inlet to the outlet,
d. a transparent tube (18) arranged at least partly in the conduit, said transparent tube being suitable for arranging a UV light source in the transparent tube,
e. a wiper (46) arranged on said transparent tube and arranged to be displaceable along a longitudinal axis of the transparent tube to clean the transparent tube,
f. a displacement mechanism (48) for displacing the wiper along the transparent tube, said displacement mechanism comprising
i. a spindle (50) with an external thread, said spindle being arranged such that a longitudinal axis of the spindle is parallel to the longitudinal axis of the transparent tube and such that the spindle is rotatable around the longitudinal axis of the spindle, and
ii. a connection element (56) connecting the spindle and the wiper, such that rotation of the spindle drives the displacement of the wiper,
**characterized in that** the displacement mechanism further comprises:
g. a driving element (58) arranged at one end of the spindle, and
h. a rotatable ring (60) having an axis of rotation, an outside surface (63) and an inside surface (62), said rotatable ring comprising driving means (62) arranged on the inside surface of the rotatable ring, said driving means cooperating with said driving element, such that rotation of the rotatable ring causes rotation of the driving element which causes rotation of the spindle which causes displacement of the wiper.

2. Fluid treatment unit according to claim 1, **characterized in that** the outer surface (63) of the rotatable ring (60) is arranged to be turned by a hand of a user.

3. Fluid treatment unit according to claim 1 or 2, **characterized in that** the displacement mechanism (48) further comprises a handle (102) which is arranged to turn the rotatable ring (104).

4. Fluid treatment unit according to claim 3, **characterized in that** the handle (102) comprises a plate like element (116) comprising a hole (114) suitable for a user to place a finger inside, a centre of said hole being arranged offset from an outer surface (63) of the rotatable ring (60).

5. Fluid treatment unit according to any one of claims 1 to 4, **characterized in that** when looking at the displacement mechanism (48) along an axis which parallel to the axis of rotation of the rotatable ring (60), a cross section of the transparent tube (18) is arranged inside an area defined by the outer surface (63) of the rotatable ring (60).

6. Fluid treatment unit according to any one of claims 1 to 5, **characterized in that** the fluid treatment unit further comprises a first fixed portion (32) and a central portion (66), said first fixed portion being arranged between the rotatable ring (60) and the wiper (46), said first fixed portion being fixed in position with respect to the conduit (7) along a dimension which is parallel to the axis of rotation of the rotatable ring (60) and having a dimension perpendicular to the axis of rotation of the rotatable ring from the axis of rotation of the rotatable ring to an outer portion of the first fixed portion which is greater than the radius of the inner surface (62) of the rotatable ring and said central portion (66) comprising a support surface for rotationally supporting the inside surface of the rotatable ring.

7. Fluid treatment unit according to claim 6, **characterized in that** said fluid treatment unit further comprises a second fixed portion (68), said second fixed portion being arranged further from the conduit (7) than the first fixed portion (32) and having a dimension from the axis of rotation of the rotatable ring to an outer portion of the second fixed portion which is greater than the radius of the inner surface of the rotatable ring.

8. Fluid treatment unit according to claim 7, **characterized in that** said second fixed portion (68) is connected to the first fixed portion (32) via one or more screws/bolts.

9. Fluid treatment unit according to claim 8, **characterized in that** said central portion (66) is integrally formed together with the second fixed portion (68).

10. Fluid treatment unit according to any one of claims 6 to 9, **characterized in that** an outer diameter of at least a portion of the first fixed portion (32) and an outer diameter of at least a portion of the rotatable ring (60) are the same.
